# EUROPÄISCHE PATENTSCHRIFT

(11) **EP 3 467 441 B1**
(45) Veröffentlichungstag und Bekanntmachung des Hinweises auf die Patenterteilung: **28.04.2021**
(21) Anmeldenummer: 18181800.6
(22) Anmeldetag: 05.07.2018
(51) Int. Cl.: G01D 4/00, G01D 5/39

(54) **LEISTUNGSERFASSUNGSVORRICHTUNG**
POWER DETECTION DEVICE
DISPOSITIF DE DÉTECTION DE PERFORMANCE

(30) Priorität: 05.10.2017 DE 102017123056
(43) Veröffentlichungstag der Anmeldung: 10.04.2019
(73) Patentinhaber: innogy SE, 45128 Essen (DE)
(72) Erfinder: Konzen, Willi, 45359 Essen (DE); Nikodem, Torsten, 58453 Witten (DE); Radtke, Gerhard, 44869 Bochum (DE); Schmidt, Eugen, 46487 Wesel (DE)
(74) Vertreter: Cohausz & Florack

(56) Entgegenhaltungen:
- EP-A2- 0 756 156
- DE-A1- 19 519 938
- DE-A1- 19 833 046
- DE-A1-102014 012 100

## Beschreibung

Der Gegenstand betrifft eine Leistungerfassungsvorrichtung.

DE 198 33 046 A1 offenbart eine Leistungserfassungvorrichtung, die durch zweimalige optische Detektion einer, sich auf einer Drehscheibe der Leistungserfassungsvorrichtung befindlichen, Markierung, eine Wegstrecke pro Umdrehung bestimmt, die einer bestimmten Wirkarbeit entspricht.

DE 10 2014 012100 A1 offenbart eine Leistungserfassungvorrichtung, die mittels dem Erfassen von Bildern einer Zählscheibe eines Zählwerks einen optischen Fluss bestimmt, der dazu verwendet wird, die Drehgeschwindigkeit des Zählwerks zu bestimmen und daraus eine Momentanleistung abzuleiten.

Die meisten derzeit verbauten Verbrauchsmengenzähler, beispielsweise Stromzähler Wasserzähler oder Gaszähler, arbeiten mit einer Zählscheibe. Diese rotiert abhängig von dem aktuellen Verbrauch, beispielsweise der elektrischen Leistung oder dem Volumenstrom. Mit Hilfe der Zähler ist eine elektrische Energie oder ein Volumen von Gas oder Wasser erfassbar.

Insbesondere elektrische Stromzähler arbeiten nach dem Ferraris-Prinzip. Bei diesem ist die Geschwindigkeit einer in das Messsystem eingebauten Zählscheibe proportional zu der entnommenen Wirkenergie.

Die Zählscheibe dient bei den bisherigen Zählern jedoch lediglich der Anzeige in einem Sichtfenster, das überhaupt Wirkenergie entnommen wird. Eine genaue Leistungsangabe kann hieraus durch den Nutzer ermittelt werden. Das numerische Zählwerk für den Arbeitswert (in kWh) wird durch die Zählscheibe angetrieben. Die Ferraris-Messsysteme setzen die bezogene Wirkleistung in eine Drehbewegung der Zählscheibe um. Anschließend wird die Anzahl der Umdrehungen auf einem Rollenzählwerk mit nummerischer Anzeige zur Anzeige gebracht. Jeder Zähler hat eine spezifische Kenngröße, welche die Umdrehungen pro Energieeinheit (U/kWh) angibt. Die Angabe auf dem Rollenzählwerk entspricht der entnommenen Wirkarbeit in kWh, welche zur Abrechnung kommt.

Problematisch ist jedoch, dass lediglich die Wirkarbeit ausgegeben wird. Für Stromverbrauchsanalysen, Einsparungsermittlungen und Detektion "größerer" Stromverbraucher ist jedoch eine zeitgenaue, aktuelle Leistungsanzeige unerlässlich. Herkömmliche Verbrauchsmengenzähler mit Zählwerk und Zählscheibe bieten solche Leistungsanzeigen nicht und aktuelle Abtastsysteme liefern lediglich einen Mittelwert der Leistung mit großer zeitlicher Verschiebung.

Somit lag dem Gegenstand die Aufgabe zugrunde, einen Momentanleistungswert für Bestandsanlagen anzeigbar zu machen.

Diese Aufgabe wird durch eine Leistungserfassungsvorrichtung nach Anspruch 1 gelöst.

Im Gegensatz zu den bisher bekannten Verfahren, welche beispielsweise die rote Markierung auf der Zählscheibe detektieren und abhängig davon eine Leistungsangabe ausgeben, beruht der Gegenstand auf der Bildauswertung des äußeren, sichtbaren Teils der Zählscheibe. Insbesondere wird unmittelbar ein Bewegungsparameter, insbesondere die aktuelle Geschwindigkeit, der Zählscheibe ausgewertet.

Mit Hilfe von Bildabtastverfahren, beispielsweise unter Verwendung von Laser/LED-Technologie, ist es möglich, Bewegungsinformationen in den erfassten Bildern entlang zumindest einer Achse zu erfassen. Die Bewegungsinformation wird dabei vorzugsweise in einer Achse parallel zur Zählscheibe erfasst. Die Bewegungsinformation wird dabei insbesondere durch die Auswertung zweier zeitlich aufeinanderfolgender Bilder durchgeführt. Insbesondere können zwei aufeinanderfolgende Bilder korreliert werden, insbesondere kreuzkorreliert werden, um somit Verschiebungen von einzelnen Pixeln entlang der betrachteten Achse zu ermitteln.

Aus dieser Bewegungsinformation wird eine Momentanleistung des Verbrauchsmengenzählers bestimmt. Jeder Verbrauchsmengenzähler hat eine bestimmte Kenngröße, die in Umdrehungen pro Energie (U/kWh) angegeben wird. Unter Verwendung dieser Kenngröße als auch der Bewegungsinformation lässt sich die Momentanleistung unter Berücksichtigung der Zeit bestimmen. Gemäß einem Ausführungsbeispiel wird vorgeschlagen, dass eine Befestigungseinrichtung zur dauerhaften Befestigung der Leistungserfassungsvorrichtung an einem Sichtfenster des Verbrauchsmengenzählers vorgesehen ist. Herkömmliche Zähler weisen ein Sichtfenster auf. In dem Sichtfenster ist eine Scheibe eingesetzt. Auf diese Scheibe lässt sich beispielsweise klebend die Leistungserfassungsvorrichtung dauerhaft befestigen. In diesem Fall ist die Befestigungseinrichtung ein Klebestreifen oder dergleichen. Über eine integrierte Optik in der Bilderfassungseinheit lässt sich dann durch das Sichtfenster bzw. die Scheibe hindurch die Zählscheibe abtasten. Insbesondere lässt sich eine Geschwindigkeit als Bewegungsparameter aus der Bewegungsinformation ableiten. Dabei kann beispielsweise die Strecke der Bewegung eines Pixels pro Zeiteinheit bestimmt werden, beispielsweise zwischen zwei Bildern. Ist die Abtastrate der Bilder bekannt, so lässt sich hieraus die Geschwindigkeit des Pixels entlang der Achse bestimmen.

Zur Bestimmung einer Leistung aus der Bewegungsinformation ist es notwendig, die Charakteristik der Zählscheibe des Verbrauchsmengenzählers zu kennen. Dabei ist insbesondere die Wegstrecke pro Umdrehung der Zählscheibe interessant. Dies ist der Umfang der Zählscheibe. Ist bekannt, welche Energie einer ganzen Umdrehung zugeordnet ist, so kann anschließend einer Wegstrecke eine Wirkarbeit zugeordnet werden. Bei einem Zähler mit beispielsweise 75 U/kWh entspricht eine Umdrehung 1/(75 kWh). Ist die Wegstrecke pro Umdrehung beispielsweise 100 cm entspricht eine Wegstrecke von 1 cm einem 1/100 der Wegstrecke pro Umdrehung und die Wirkarbeit bei einer Bewegung um 1 cm ist (1/7500) kWh.

Gemäß einem nicht zur Erfindung gehörenden Ausführungsbeispiel wird vorgeschlagen, dass in dem Prozessor eine Liste mit Informationen zu einer Wegstrecke pro Wirkarbeit für zumindest zwei Typen von Verbrauchsmengenzählern hinterlegt ist. In diesem Fall ist die Kalibrierung unnötig und es kann unmittelbar nach Eingabe des Typs des Verbrauchsmengenzählers der Wegstrecke eine Wirkstrecke zugeordnet werden.

Auf den meisten Zählscheiben ist in einem Winkelabschnitt ein farblich abgehobener Bereich, beispielsweise ein roter Bereich. Anhand dieses Bereichs lässt sich beispielsweise feststellen, dass eine komplette Umdrehung vollzogen wurde. Der damit einhergehende Kontrastwechsel kann zur Kalibrierung des Prozessors genutzt werden. Dabei kann der Prozessor zur Erfassung einer ganzen Umdrehung einen Kontrastwechsel auf der Zielscheibe detektieren. Dann kann dieser ganzen Umdrehung anhand der erfassten Bewegungsinformationen eine Wegstrecke zugeordnet werden.

Erfindungsgemäß wird vorgeschlagen, dass der Prozessor die erfasste Geschwindigkeit über eine ganze Umdrehung integriert und daraus eine Wegstrecke pro Umdrehung bestimmt. Zunächst kann durch die Auswertung der Wegstrecke der Pixel und der Kenntnis der Zeit die Geschwindigkeit der Zählscheibe bestimmt werden. Diese kann zu jedem Zeitpunkt bestimmt werden und durch eine Integration lässt sich die gesamte Wegstrecke pro Umdrehung bestimmen und damit den Prozessor entsprechend kalibrieren.

In Kenntnis der Geschwindigkeit (m/s) und der Wirkarbeit pro Bewegungseinheit (m/Ws) kann aus dem Quotient der Geschwindigkeit und der Wirkarbeit pro Bewegungseinheit die aktuelle Wirkleistung (W) bestimmt werden Auch wird vorgeschlagen, dass die Bilderfassungseinheit eine Linse und einen Sensor derart aufweist, dass der Sensor auf eine Zählscheibe fokussiert ist. Dabei kann der Sensor in einer Bildweite b von der Linse entfernt sein. Die Linse kann eine Brennweite f haben. Der Abstand zwischen dem äußeren der Sichtscheibe und der Zählscheibe kann als Gegenstandsweite g angesehen werden. Die Bildweite b und die Brennweite f kann so gewählt werden, dass in etwa gilt 1/b+1/g=1/f. Hierdurch ist eine Fokussierung der Zählscheibe auf den Sensor möglich.

Gemäß einem Ausführungsbeispiel wird vorgeschlagen, dass der Verbrauchsmengenzähler ein Ferraris-Zähler ist. Ein solcher Ferraris-Zähler basiert auf einer Zählscheibe, die abhängig von der Wirkleistung angetrieben wird. Durch zeitliche Integration der Bewegung der Zählscheibe kann eine Wirkenergie angegeben werden.

Die Bilderfassungseinheit und der Prozessor sind bevorzugt als diskretes Bauteil gebildet. So ist beispielsweise der massenhafte Einsatz von Chip mit Kamera bekannt. So ist beispielsweise in Computermäusen ein solches Bauteil millionenfach eingesetzt. Ein Beispiel eines solchen Chips ist ein A2015 von Agilent. Mit diesem können verschiedene Bewegungsparameter ausgegeben werden, beispielsweise die Wegstrecke entlang einer Achse oder die Geschwindigkeit entlang einer Achse.

Über die Kenntnis der zurückgelegten Strecke pro Zeit lassen sich Rückschlüsse auf die momentane Leistung ziehen. Hierdurch kann ein aktueller Leistungswert angegeben werden, der der aus dem Netz entnommenen Leistung entspricht. Ein diskretes Bauteil kann dabei beispielsweise eine Optik samt Auswertesoftware aufweisen. Hierbei können Bewegungsstrecken bei sehr hohen Geschwindigkeiten, beispielsweise mit 1500 Messungen pro Sekunde bestimmt und digital zur Verfügung gestellt werden.

Aus diesem Grunde wird auch vorgeschlagen, dass das diskrete Bauteil ein optischer Maussensor ist.

Schließlich wird vorgeschlagen, dass eine Kommunikationseinrichtung zum Senden der erfassten Momentanleistung vorgesehen ist. Eine solche Kommunikationseinrichtung kann beispielsweise mittels einer Funkschnittstelle, beispielsweise mittels Bluetooth, NFC, WLAN, LAN, Infrarot, GSM, GPRS, LTE, ZigBee, LON, Lemonbeat oder dergleichen die Information entweder zur Wegstrecke, zur Geschwindigkeit oder zur Momentanleistung unmittelbar an eine Einrichtung zur Weiterverarbeitung weitergeben. Dies kann beispielsweise eine Anzeigeeinrichtung sein, beispielsweise ein "Home-Display", mit dem die Momentanleistung angezeigt werden kann.

Nachfolgend wird der Gegenstand anhand einer Ausführungsbeispiele zeigenden Zeichnung näher erläutert. In der Zeichnung zeigen:
- Fig. 1a: eine schematische Ansicht eines Ferraris-Zählers;
- Fig. 1b: eine schematische Ansicht einer Zählscheibe;
- Fig. 2: eine Seitenansicht einer Leistungserfassungsvorrichtung an einem Ferarris-Zähler;
- Fig. 3: eine schematische Darstellung einer Leistungserfassungsvorrichtung.

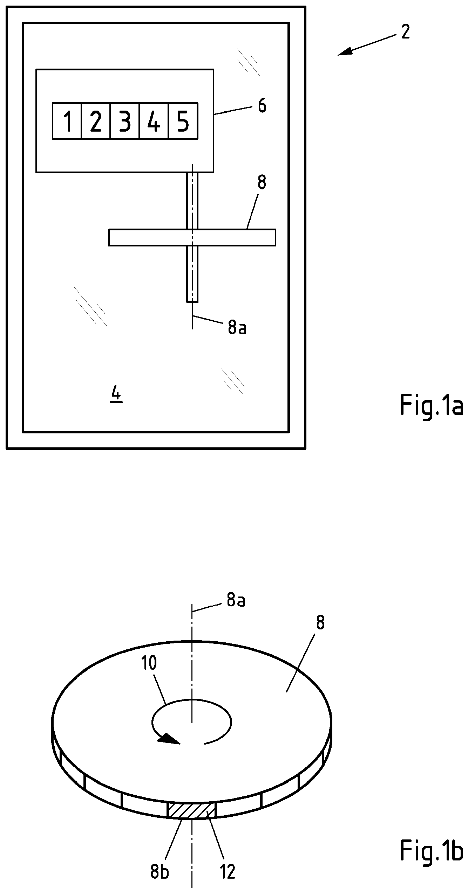

Fig. 1a zeigt einen Verbrauchsmengenzähler 2, beispielsweise einen Ferraris-Zähler. Dieser verfügt über eine Sichtscheibe 4, an der ein Zählwerk 6 sowie eine Zählscheibe 8 ablesbar sind. Auf dem Zählwerk 6 ist ein nummerischer Wert der erfassten Wirkenergie angegeben. Die Zählscheibe 8 rotiert um die Achse 8a abhängig von der momentanen Wirkleistung. Hierbei ist die Rotationsgeschwindigkeit abhängig von der momentanen Wirkleistung. Das Zählwerk zeigt jedoch nur den über die Zeit integrierten Wert der Drehgeschwindigkeit der Zählscheibe 8 an, so dass eine Angabe einer momentanen Wirkleistung unmöglich ist.

Die Zählscheibe ist in Fig. 1b noch einmal dargestellt. Dort ist zu erkennen, dass die Zählscheibe 8 in eine Vielzahl von Sektionen unterteilt ist und ein Bereich 8b kann in einem Kontrast zu dem restlichen Bereich abgehoben werden. Dieser Bereich kann dazu genutzt werden, um eine ganze Umdrehung festzustellen.

Zur Kalibrierung des Prozessors kann beispielsweise detektiert werden, wenn in Drehrichtung 10 der Zählscheibe 8 eine Front 12 in den Sichtbereich bzw. den Detektionsbereich des Sensors tritt. Ab diesem Moment kann beispielsweise eine Integration über die erfasste Geschwindigkeit erfolgen. Sobald die Front 12 erneut in den Detektionsbereich eintritt, nachdem die Zählscheibe 8 in Drehrichtung 10 eine ganze Umdrehung vollzogen hat, kann die Integration beendet werden. Hieraus ist nun die Wegestrecke pro Umdrehung bekannt.

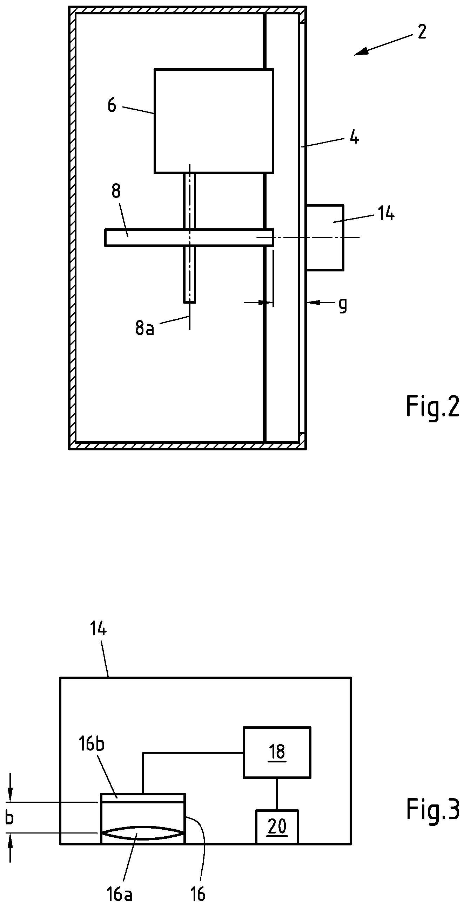

Hierzu kann die Leistungserfassungsvorrichtung entsprechend der Fig. 2 an dem Ferraris-Zähler 2 angeordnet sein. Hierbei ist zu erkennen, dass die Zählscheibe 8 im Bereich der Sichtscheibe 4 sichtbar ist. In einem Abstand g von der Außenkante der Zählscheibe 8 kann die Leistungserfassungsvorrichtung 14 auf der Sichtscheibe 4 angeklebt werden. Dabei ist die optische Achse der Leistungserfassungsvorrichtung 14 bzw. der Bilderfassungseinheit in der Ebene der Zählscheibe 8.

Fig. 3 zeigt eine Anordnung einer Leistungserfassungsvorrichtung 14 mit einer Bilderfassungseinrichtung 16, einem Prozessor 18 sowie einer Kommunikationseinrichtung 20. In der Bilderfassungseinrichtung 16 ist eine Linse 16a sowie ein Bildsensor 16b vorgesehen. In einem Bildabstand b liegt der Sensor 16b von der Linse 16a. Die Linse 16a hat eine Brennweite von f. Die Anordnung der Leistungserfassungseinrichtung 14 auf der Sichtscheibe 4 ist derart, dass insbesondere 1/g+1/b=1/f ist. Hierdurch ist die Oberfläche der Zählscheibe 8 fokussiert auf der Sensoroberfläche des Sensors 16b.

Mit Hilfe des Sensors 16b lassen sich einzelne Bildpunkte erfassen und durch den Prozessor 18 auswerten. Hierbei kann der Prozessor 18 beispielsweise zwei von dem Sensor 16b aufeinander folgend aufgenommene Bilder korrelieren und somit eine Bewegung eines Bildpunktes bestimmen.

Die Bewegung des Bildpunktes ist dabei vorzugsweise entlang einer Achse die parallel zur Ebene der Zählscheibe 8 verläuft. In Kenntnis der Zeit, das heißt der Anzahl der Aufnahmen pro Minute bzw. pro Sekunde lässt sich aus der berechneten Wegstrecke die Geschwindigkeit ermitteln. Aufgrund dieser Geschwindigkeit lässt sich in Kenntnis der Wegstrecke pro Energieeinheit der momentane Leistungswert angeben. Dieser momentane Leistungswert kann in dem Prozessor 18 fortlaufend berechnet werden und beispielsweise mittels Funk über die Kommunikationseinrichtung 20 ausgegeben werden.

### Bezugszeichenliste

- 2: Verbrauchsmengenzähler
- 4: Sichtfenster
- 6: Zählwerk
- 8: Zählscheibe
- 8a: Drehachse
- 10: Drehrichtung
- 12: Front eines Kontrastbereichs
- 14: Leistungserfassungseinrichtung
- 16: Bilderfassungseinrichtung
- 16a: Linse
- 16b: Sensor
- 18: Prozessor
- 20: Kommunikationseinrichtung

## Patentansprüche

1. Leistungserfassungsvorrichtung umfassend,
- eine Bilderfassungseinheit (16) eingerichtet zum Erfassen von Bildern einer Zählscheibe (8) eines Zählwerks (6) eines Verbrauchsmengenzählers (2),
- einen Prozessor (18) eingerichtet zum Auswerten der erfassten Bilder derart, dass zur Erfassung einer Bewegungsinformation entlang einer Achse zumindest zwei zeitlich aufeinanderfolgende Bilder korreliert werden und eingerichtet zum Berechnen einer Momentanleistung des Verbrauchsmengenzählers (2) abhängig von der Bewegungsinformation, wobei die Bewegungsinformation eine Geschwindigkeit ist,
wobei
- der Prozessor (18) kalibriert ist, derart, dass eine Wegstrecke pro Umdrehung der Zählscheibe (8) erfasst wird und dass dieser Wegstrecke pro Umdrehung eine definierte Wirkarbeit zugeordnet ist, wobei der Prozessor (18) dazu eingerichtet ist, zur Kalibrierung die erfasste Geschwindigkeit über eine ganze Umdrehung zu integrieren, daraus die Wegstrecke pro Umdrehung zu bestimmen und schließlich aus dieser Wegstrecke pro Umdrehung und der definierten Wirkarbeit pro Umdrehung eine Wirkarbeit pro Wegstrecke zu berechnen.

2. Leistungserfassungsvorrichtung nach Anspruch 1,
**dadurch gekennzeichnet,**
- **dass** eine Befestigungseinrichtung zur dauerhaften Befestigung an einem Sichtfenster (4) des Verbrauchsmengenzählers (2) vorgesehen ist.

3. Leistungserfassungsvorrichtung nach einem der vorangehenden Ansprüche,
**dadurch gekennzeichnet,**
- **dass** in dem Prozessor (18) eine Liste mit Informationen zu einer Wegstrecke pro Wirkarbeit für zumindest zwei Typen von Verbrauchsmengenzählern (2) hinterlegt ist.

4. Leistungserfassungsvorrichtung nach einem der vorangehenden Ansprüche,
**dadurch gekennzeichnet,**
- **dass** der Prozessor (18) dazu eingerichtet ist, zur Erfassung einer ganzen Umdrehung einen Kontrastwechsel auf der Zählscheibe (8) zu detektieren.

5. Leistungserfassungsvorrichtung nach einem der vorangehenden Ansprüche,
**dadurch gekennzeichnet,**
- **dass** die Bilderfassungseinheit (16) eine Linse (16a) und einen Sensor (16b) derart aufweisen, dass der Sensor (16) auf eine Zählscheibe (8) fokussiert ist.

6. Leistungserfassungsvorrichtung nach einem der vorangehenden Ansprüche,
**dadurch gekennzeichnet,**
- **dass** der Verbrauchsmengenzähler (2) ein Ferrariszähler ist.

7. Leistungserfassungsvorrichtung nach einem der vorangehenden Ansprüche,
**dadurch gekennzeichnet,**
- **dass** die Bilderfassungseinheit (16) und der Prozessor (18) als diskretes Bauteil gebildet sind.

8. Leistungserfassungsvorrichtung nach einem der vorangehenden Ansprüche,
**dadurch gekennzeichnet,**
- **dass** das diskrete Bauteil ein optischer Maussensor ist.

9. Leistungserfassungsvorrichtung nach einem der vorangehenden Ansprüche,
**dadurch gekennzeichnet,**
- **dass** eine Kommunikationseinrichtung (20) zum Senden der erfassten Momentanleistung gebildet ist.

## Claims

1. Power detection device comprising,
- an image acquisition unit (16) arranged to capture images of a counter disc (8) of a counter (6) of a consumption quantity meter (2),
- a processor (18) arranged to evaluate the aquired images such that at least two images following one another in time are correlated in order to acquire movement information along an axis, and arranged to calculate an instantaneous power of the consumption quantity meter (2) as a function of the movement information, the movement information being a velocity,
wherein
- the processor (18) is calibrated in such a way that a distance per revolution of the counter disc (8) is detected and that a defined active energy is assigned to this distance per revolution, the processor (18) being set up to integrate the detected velocity over a complete revolution for calibration, to determine the distance per revolution therefrom and finally to calculate an active energy per distance from this distance per revolution and the defined active energy per revolution.

2. Power detection device according to claim 1,
**characterized in that**
- a fastening device is provided for permanent fastening to a viewing window (4) of the consumption quantity meter (2).

3. Power detection device according to one of the preceding claims,
**characterized in that**
- a list with information on a distance per active energy for at least two types of consumption quantity meters (2) is stored in the processor (18).

4. Power detection device according to one of the preceding claims,
**characterized in that**
- the processor (18) is arranged to detect a contrast change on the counter disc (8) in order to detect a complete revolution.

5. Power detection device according to one of the preceding claims,
**characterized in that**
- the image acquisition unit (16) comprises a lens (16a) and a sensor (16b) such that the sensor (16) is focused on a counter disc (8).

6. Power detection device according to one of the preceding claims,
**characterized in that**
- the consumption quantity meter (2) is a Ferraris meter.

7. Power detection device according to one of the preceding claims,
**characterized in that**
- the image acquisition unit (16) and the processor (18) are formed as a discrete component.

8. Power detection device according to one of the preceding claims,
**characterized in that**
- the discrete component is an optical mouse sensor.

9. Power detection device according to one of the preceding claims,
**characterized in that**
- a communication device (20) is arranged to transmit the detected instantaneous power.

## Revendications

1. Dispositif de saisie de puissance comprenant,
- une unité de capture d'images (16) configurée pour capturer des images d'un disque de comptage (8) d'un mécanisme compteur (6) d'un compteur de volume de consommation (2),
- un processeur (18) configuré pour évaluer les images captées de manière à ce que, pour saisir des informations de mouvement le long d'un axe, au moins deux images se succédant temporellement soient corrélées, et configuré pour calculer une puissance instantanée du compteur de volume de consommation (2) dépendant des informations de mouvement, où l'informations de mouvement est une vitesse,
où
- le processeur (18) est calibré, de manière à ce qu'une distance par tour du disque de comptage (8) est saisi et qu'une énergie active définie est attribuée à cette distance par tour, où le processeur (18) est configuré pour, au but de calibrage, intégrer la vitesse détectée sur un tour entier, déterminer la distance par tour à partir de là et enfin calculer une énergie active par distance à partir de cette distance par tour et de l'énergie active définie par tour.

2. Dispositif de saisie de puissance selon la revendication 1,
**caractérisé en ce que**
- un dispositif de fixation est prévu pour la fixation permanente à une fenêtre d'observation (4) du compteur de volume de consommation (2).

3. Appareil de saisie de puissance selon l'une des revendications précédentes,
**caractérisé en ce que**
- une liste avec des informations sur une distance par énergie active pour au moins deux types de compteurs de volume de consommation (2) est enregistrée dans le processeur (18).

4. Dispositif de saisie de puissance selon l'une des revendications précédentes,
**caractérisé en ce que**
- le processeur (18) est configuré pour détecter un changement de contraste sur le disque de comptage (8) afin de détecter un tour complet.

5. Dispositif de saisie de puissance selon l'une des revendications précédentes,
**caractérisé en ce que**
- l'unité de capture d'images (16) comprend une lentille (16a) et un capteur (16b) de telle sorte que le capteur (16) est focalisé sur un disque de comptage (8).

6. Dispositif de saisie de puissance selon l'une des revendications précédentes,
**caractérisé en ce que**
- le compteur de volume de consommation (2) est un compteur Ferraris.

7. Dispositif de saisie de puissance selon l'une des revendications précédentes,
**caractérisé en ce que**
- l'unité de capture d'image (16) et le processeur (18) sont formés sous forme d'un composant discret.

8. Dispositif de saisie de puissance selon l'une des revendications précédentes,
**caractérisé en ce que**
- le composant discret est un capteur optique de souris.

9. dispositif de saisie de puissance selon l'une des revendications précédentes,
**caractérisé en ce que**
- un dispositif de communication (20) est formé pour transmettre la puissance instantanée détectée.
